# EUROPEAN PATENT APPLICATION

(11) **EP 3 023 860 A1**
(43) Date of publication of application: **25.05.2016**
(21) Application number: 15195057.3
(22) Date of filing: 17.11.2015
(51) Int. Cl.: G06F 1/32

(54) **USER TERMINAL AND METHOD FOR CONTROLLING DISPLAY APPARATUS**

(30) Priority: 21.11.2014 KR 20140163251
(71) Applicant: Samsung Electronics Co., Ltd., Gyeonggi-do 16677 (KR)
(72) Inventor: YOON, Seung-il, Gyeonggi-do, (KR); NAM, Dae-hyun, Gyeonggi-do, (KR); YUN, Hyun-kyu, Seoul, (KR)
(74) Representative: Appleyard Lees IP LLP

(57) **Abstract**

A user terminal (100) and method for controlling a display apparatus (200) are provided. A user terminal (100) includes a detector (110) configured to detect a user or user interaction, and a controller (130) configured to change a mode of the user terminal (100) from a first sleep mode to a second sleep mode in response to an occurrence of a first event in which a user is detected by the detector (110) while the user terminal (100) is in the first sleep mode, and to change the mode of the user terminal (100) from the second sleep mode to a standby mode in response to an occurrence of a second event in which a user manipulation intention is detected by the detector (110) while the user terminal (100) is in the second sleep mode.

## Description

### CROSS-REFERENCE TO RELATED APPLICATIONS

This application claims priority from Korean Patent Application No. 10-2014-0163251, filed on November 21, 2014 in the Korean Intellectual Property Office, the disclosure of which is incorporated herein by reference in its entirety.

### BACKGROUND

### Field

Apparatuses and methods consistent with exemplary embodiments relate to a user terminal and method for controlling a display apparatus, and more particularly, to a user terminal and method for controlling a display apparatus, for effective power management of the user terminal.

### Description of the Related Art

Recently, user terminals other than a remote controller have been used to control a display apparatus such as a television (TV). For example, a user may use an application installed in a user terminal, such as a smart phone or a tablet personal computer (PC), to control a display apparatus. Further, various types of user terminals are capable of being used to control display apparatuses.

Such user terminals capable of being used to control display apparatuses typically include a separate display, a speaker, and various communication modules in order to easily control the display apparatus, and thus the user terminals may have a higher power consumption than a simple remote controller. Accordingly, the user terminal must be charged often.

A user terminal is frequently shared and used by a plurality of users. That is, the user terminal is an object that is shared and used by a plurality of users that use a display apparatus, and thus a user terminal used for controlling the display apparatus may not be charged as frequently as a smart phone, a table PC, or a notebook computer that is used by a user alone.

Accordingly, there is a need for a method for responding immediately (e.g. sufficiently quickly so as to not significantly degrade a user experience and/or to improve a user experience) to a user command for control of a display apparatus while effectively managing power of a user terminal for controlling the display apparatus.

### SUMMARY

Exemplary embodiments overcome the above disadvantages and other disadvantages not described above. However, the exemplary embodiments are not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

One or more exemplary embodiments provide a user terminal and method for controlling a display apparatus that immediately responds to a user command while effectively managing usage power according to surrounding environment and various pieces of information thereof.

According to an aspect of an exemplary embodiment, there is provided a user terminal (e.g. being or comprising a display) including a detector configured to detect a user or user interaction, and a controller configured to change a mode of the user terminal from a first sleep mode to a second sleep mode in response to an occurrence of a first event in which a user (e.g. the user, for example the same user) is detected by the detector while the user terminal is in the first sleep mode, and to change the mode of the user terminal from the second sleep mode to a standby mode in response to an occurrence of a second event in which a user manipulation intention (e.g. which might be the user or the user interaction) is detected by the detector while the user terminal is in the second sleep mode.

The controller may include a main controller and a sub-controller, the main controller may be configured to be powered off while the user terminal is in the second sleep mode, and the sub-controller may be configured to power on the main controller to change the mode of the user terminal to the standby mode in response to the occurrence of the second event in which the user manipulation intention is detected by the detector while the user terminal is in the second sleep mode.

The user terminal may further include a volatile memory, wherein the volatile memory may be configured to be powered off during the first sleep mode, and the sub controller may be configured to power on the volatile memory to change the mode of the user terminal to the second sleep mode in response to the occurrence of the first event in which the user is detected by the detector or user detection information being received from the display apparatus while the user terminal is in the first sleep mode.

The first event may include a presence of the user within a preset distance being detected by the detector.

The second event may include at least one the user grasping the user terminal, a motion of the user terminal, user proximity, and user touch are detected through the detector.

According to an aspect of another exemplary embodiment, there is provided a user terminal (e.g. being or comprising a display) including a detector configured to detect a user or user interaction, and a controller configured to convert a mode of the user terminal to a sleep mode when a manipulation intention detection event for detection of user manipulation intention does not occur within preset threshold time while the user terminal maintains a standby mode, and to convert the mode of the user terminal to a deep sleep mode when a user detection event for detection of the user does not occur within preset threshold time while the user terminal maintains the sleep mode.

The controller may include a main controller and a sub-controller, and the main controller may be configured to transmit a command for powering off the main controller to the sub-controller and power off the main controller to change the mode of the user terminal to the sleep mode when the manipulation intention detection event does not occur within a preset first threshold period of time while the mode of the user terminal is in the standby mode, wherein the manipulation intention detection event may comprise at least one of detecting a user grasping the user terminal, detecting motion of the user terminal, detecting proximity of a user to the user terminal, or detecting a user touching the user terminal.

The user terminal may further include a volatile memory, and a non-volatile memory, wherein the sub controller is configured to power off the main controller to change the mode of the user terminal to the deep sleep mode in response to presence of the user within a preset distance being detected by the detector while the mode of the user terminal is in the sleep mode.

According to an aspect of another exemplary embodiment, there is provided a method of controlling a user terminal, the method including operating in a first sleep mode, changing a mode of the user terminal to a second sleep mode in response to an occurrence of a first event in which a user is detected while the user terminal is in the first sleep mode, and changing the mode of the user terminal to a standby mode in response to an occurrence of a second event in which a user manipulation intention is detected while the user terminal is in the second sleep mode.

The changing to the standby mode may include powering on a main controller that is powered off while the user terminal is in the second sleep mode to change the mode of the user terminal to the standby mode by a sub-controller included in the user terminal in response to the occurrence of the second event in which the user manipulation intention is detected during the second sleep mode.

The changing to the second sleep mode may include powering a volatile memory that is powered off while the first sleep mode is maintained to convert the mode of the user terminal to the second sleep mode by the sub controller in response to the occurrence of the first event in which the user is detected while the user terminal is in the first sleep mode.

The first event may include a detecting the presence of the user within a preset distance.

The second event may include at least one of detecting a user grasping the user terminal, detecting motion of the user terminal, detecting proximity of the user to the user terminal, and detecting a user touching the user terminal.

According to an aspect of another exemplary embodiment, there is provided a method of controlling a user terminal, the method including operating the user terminal in a standby mode, changing a mode of the user terminal to a sleep mode in response to a manipulation intention detection event for detection of user manipulation intention not occurring within a first threshold period of time while the user terminal is in the standby mode, and changing the mode of the user terminal to a deep sleep mode in response to a user detection event for detection of the user not occurring within a second threshold period of time while the user terminal is in the sleep mode.

The changing to the sleep mode may include powering off a main controller that is powered on while the standby mode is maintained to change the mode of the user terminal to the sleep mode in response to the manipulation intention detection event not occurring within the first threshold period of time while the user terminal maintains the standby mode, wherein the manipulation intention detection event comprises at least one of detecting a user grasping the user terminal, detecting motion of the user terminal, detecting proximity of a user to the user terminal, and detecting a user touching the user terminal.

The changing to the deep sleep mode may include supplying power to the main controller in response to detecting presence of the user within a preset distance within the second threshold period of time while the user terminal is in the sleep mode, and moving information stored in a volatile memory to a non-volatile memory and powering off the volatile memory and the main controller to change the mode of the user terminal to the deep sleep mode.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram illustrating a display apparatus and a user terminal according to an exemplary embodiment;
FIG. 2 is a schematic block diagram of a configuration of a user terminal for controlling a display apparatus according to an exemplary embodiment;
FIG. 3 is a diagram illustrating a configuration of a user terminal according to an exemplary embodiment;
FIG. 4 is a block diagram illustrating a configuration of a display apparatus that is subjected to control of a user terminal according to an exemplary embodiment;
FIG. 5 is a diagram illustrating the case in which a display apparatus detects a user according to an exemplary embodiment;
FIG. 6 is a diagram illustrating the case in which a user terminal detects a user according to an exemplary embodiment;
FIG. 7 is a diagram illustrating the case in which a user terminal detects user grasp according to an exemplary embodiment;
FIG. 8 is a diagram for explanation of various modes of a user terminal for control of a display apparatus according to an exemplary embodiment;
FIG. 9 is a flowchart of a control method of a user terminal according to an exemplary embodiment;
FIG. 10 is a sequence diagram for explanation of a detailed control method of a user terminal according to an exemplary embodiment; and
FIG. 11 is a flowchart of a method of converting a mode of a user terminal to a sleep mode according to an exemplary embodiment.

### DETAILED DESCRIPTION OF EXEMPLARY EMBODIMENTS

The exemplary embodiments will now be described in greater detail with reference to the accompanying drawings. In the following description, a detailed description of known functions and configurations incorporated herein will be omitted when it may make the subject matter of the exemplary embodiments unclear. The terms used in the specification are to be understood in consideration of functions used in the exemplary embodiments, and can be changed according to the intent or conventionally used methods of clients, operators, and users. Accordingly, the meaning of the terms should be understood on the basis of the entire description.

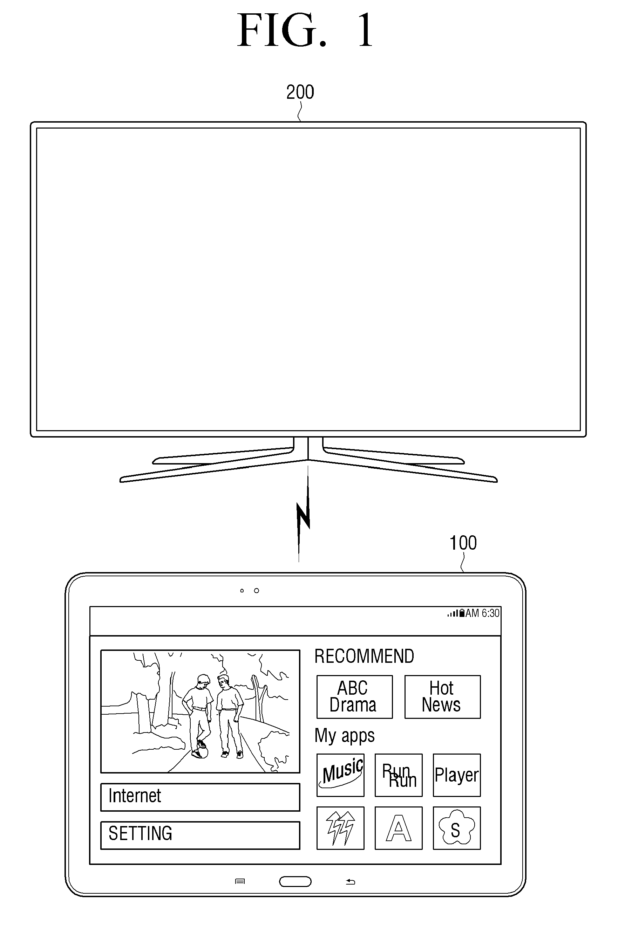

FIG. 1 is a diagram illustrating a display apparatus 200 and a user terminal 100 according to an exemplary embodiment. As illustrated in FIG. 1, although a display apparatus 200 may be a television (TV), this is merely exemplary, and the display apparatus 200 may be embodied as various electronic apparatuses including a display, which is operable in conjunction with the user terminal 100, for example, a cellular phone, a tablet personal computer (PC), a digital camera, a camcorder, a notebook PC, a desktop PC, a personal digital assistant (PDA), an MP3 player, etc.

The user terminal 100 is an electronic apparatus for controlling the display apparatus 200, such as a remote controller or a cellular phone. That is, as described later, the user terminal 100 is an electronic apparatus that separately includes a display, various sensors, and a communication unit for communication with the display apparatus 200 and receives various user commands for control of the display apparatus 200. A user may easily control the display apparatus 200 using the user terminal 100.

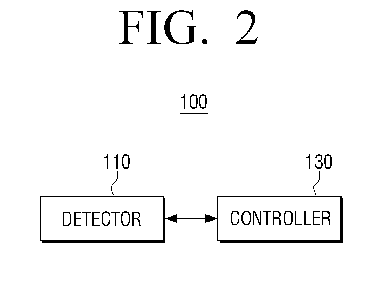

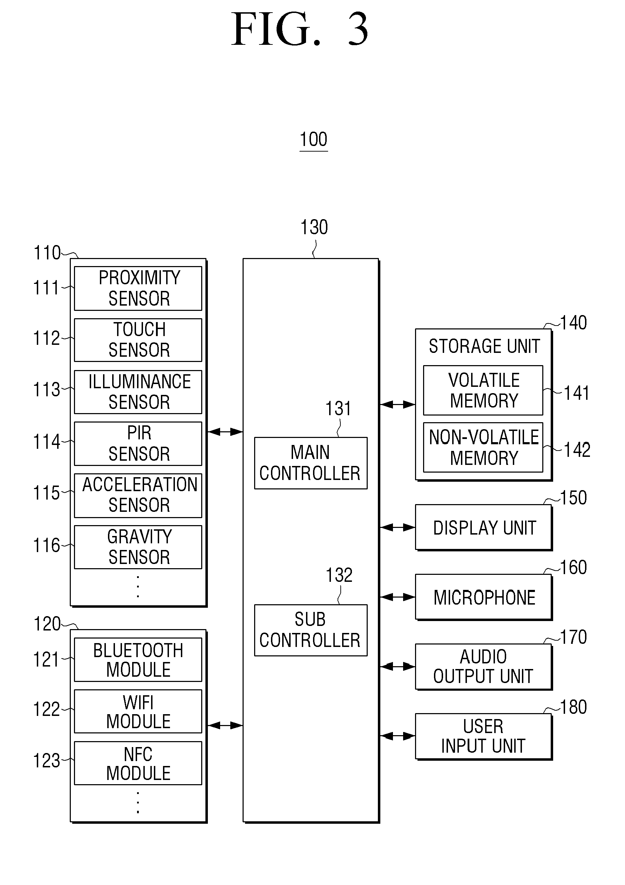

Hereinafter, with reference to FIGS. 2 and 3, the user terminal 100 for control of the display apparatus 200 will be described in detail.

First, FIG. 2 is a schematic block diagram of a configuration of the user terminal 100. The user terminal 100 includes a detector 110 and a controller 130.

The detector 110 is a component for detecting the presence of a user or user interaction. In particular, the detector 110 may include a plurality of sensors, which may detect that a user is present within a preset distance of the user terminal 100, or detect a change in illumination, a user's grasp, a user's approach, a user's touch input, motion or movement of the user terminal 100, and the like.

The controller 130 is a component for controlling an overall operation of the user terminal 100. In particular, when a preset event occurs, the controller 130 may control the user terminal 100 to change a mode of the user terminal 100.

In detail, the controller 130 may change the mode of the user terminal 100 to a standby mode from a sleep mode. That is, when a first event for detection of a user occurs while the user terminal 100 is in a first sleep mode, the controller 130 may change the mode of the user terminal 100 to a second sleep mode. In addition, when a second event for detection of user manipulation intention occurs while the user terminal 100 is in the second sleep mode, the controller 130 may change the mode of the user terminal 100 to a standby mode.

The controller 130 may change the mode of the user terminal 100 to a sleep mode from the standby mode. When a manipulation intention detection event for detection of the user manipulation intention does not occur within a preset threshold period of time while the user terminal 100 is in a standby mode, the controller 130 may change the mode of the user terminal 100 to a second sleep mode. In addition, when a user detection event for detection of a user does not occur within a preset threshold period of time while the user terminal 100 is in the second sleep mode, the controller 130 may change the mode of the user terminal 100 to the first sleep mode.

FIG. 3 is a diagram illustrating in detail a configuration of the user terminal 100 according to an exemplary embodiment. As illustrated in FIG. 3, the user terminal 100 may further include a storage unit 140, a display unit 150, a microphone 160, an audio output unit 170, and a user input unit 180 in addition to the detector 110, a communication unit 120, and the controller 130.

FIG. 3 illustrates various components of the user terminal 100 that may provide different functions of the user terminal, such as a standby mode function, an instant booting function, a display apparatus control function, a user voice recognizing function, a communication function, a video reproducing function, a display function, and the like. Accordingly, in some exemplary embodiments, some of the components illustrated in FIG. 3 may be omitted or changed and other components may be further included. The description of some components may be the same as previously stated and will not be repeated here.

The detector 110 may include a plurality of sensors in order to detect a user or user interaction. In detail, the detector 110 may include a proximity sensor 111, a touch sensor 112, an illuminance sensor 113, a passive infrared (PIR) sensor 114, an acceleration sensor 115, and/or a gravity sensor 116.

The proximity sensor 111 is a component for detecting a user's presence near to the user terminal 100. For example, the proximity sensor 111 may detect that a user is present and/or located within a close distance of about 30 to 40 cm from the user terminal 100. This range of about 30 to 40 cm is merely exemplary, and in other exemplary embodiments proximity sensor 111 may be configured to detect a user's presence when the user is located at different distances, including distances greater than or less than 30 to 40 cm from the user terminal 100.

In detail, the proximity sensor 111 may detect the user's presence by using a force of an electromagnetic field without requiring physical contact between the user and the user terminal 100. The proximity sensor 111 may be embodied in various forms such as a high frequency oscillation sensor, a capacitance type sensor, a magnetic sensor, a photoelectricity type sensor, an ultrasonic wave type sensor, and the like.

The touch sensor 112 is a component for detecting a user's touch on the user terminal 100. The touch sensor 112 may be a resistive touch sensor or a capacitance touch sensor.

The resistive touch sensor may detect a pressure applied to the user terminal 100 by a user to detect user's touch. In addition, the capacitance touch sensor may detect a user's touch by detecting a capacitance change that occurs when a part of the user's body, such as a finger, contacts the user terminal 100. However, the resistive touch sensor or the capacitance touch sensor is merely exemplary, and a touch sensor type and/or a sensing method are not limited thereto.

The illuminance sensor 113 is a component for measuring surrounding brightness. That is, the illuminance sensor 113 may measure brightness of a space in which the user terminal 100 is positioned.

The PIR sensor 114 is a component that detects infrared radiation to detect a user. In detail, a human body emits infrared radiation having a wavelength of about 5 to 30 µm. Accordingly, the PIR sensor 114 may detect the presence of a user by detecting the heat change due to infrared radiation being emitted from the human body .

The acceleration sensor 115 is a component for detecting motion of the user terminal 100. In detail, since the acceleration sensor 115 is capable of measuring dynamic force such as acceleration, vibration, impact, etc. of an object, the acceleration sensor 115 may measure the motion of the user terminal 100.

That is, the user mainly holds and/or uses the user terminal 100 with his or her hands. Thus, while the user uses the user terminal 100, the user terminal 100 is moved. In addition, in response to the motion of the user terminal 100 being detected through the acceleration sensor 115, the user terminal 100 may determine that the user uses the user terminal 100. The gravity sensor 116 is a component for detection a direction of gravity. That is, the detection result of the gravity sensor 116 may be used to determine the motion of the user terminal 100 together with the acceleration sensor 115. In addition, a direction in which the user terminal 100 is grasped may be determined through the gravity sensor 116.

In addition to the aforementioned types of sensors, the detector 110 may further include various types of sensors such as a gyroscope sensor, a terrestrial magnetism sensor, an ultrasonic sensor, and/or a radio frequency (RF) sensor so as to detect a user or user interaction.

The communication unit 120 is a component for communication with the display apparatus 200 and various types of external devices or external servers according to various types of communication methods. That is, the communication unit 120 may include various types of communication modules and communicate with an external device or an external server in addition to the display apparatus 200.

The communication unit 120 may include a Bluetooth module 121, a WiFi module 122, and/or a NFC module 123. However, this is merely exemplary and the communication unit 120 may further include various communication modules such as a wireless communication module.

In this case, the Bluetooth module 121, the WiFi module 122, and the NFC module 123 perform communication using a Bluetooth method, a WiFi method, and an NFC method, respectively. Among these, the NFC module 123 refers to a module that operates via a near field communication (NFC) method using a band of 13.56 MHz among various RF-ID frequency bands such as 135 kHz, 13.56 MHz, 433 MHz, 860 to 960 MHz, and 2.45 GHz. When the Bluetooth module 121 or the WiFi module 122 is used, various pieces of connection information such as an SSID, a session key, etc., may be pre-transmitted and received, communication-connection can be achieved using the connection information, and then various pieces of information may be transmitted and received. The wireless communication module refers to a module that performs communication according to various communication standards such as IEEE, ZigBee, 3rd generation (3G), 3rd generation partnership project (3GPP), long term evolution (LTE), etc.

In particular, the communication unit 120 may communicate with the display apparatus 200 according to the aforementioned various communication methods. In detail, the communication unit 120 may receive various results detected by the detector 220 included in the display apparatus 200. In addition, the communication unit 120 may transmit various control commands input for control of the display apparatus 200 to the display apparatus 200.

The storage unit 140 stores various modules for driving the user terminal 100. In detail, the storage unit 140 may store software including a base module, a sensing module, and/or a presentation module.

The base module is a basic module that processes a signal transmitted from hardware included in the user terminal 100 and transmits the signal to a higher layer module. The base module includes a storage module, a security module, a network module, etc. The storage module is a program module for managing a database (DB) or a registry. A main central processing unit (CPU) may access a DB in the storage unit 140 using the storage module and read various data. The security module is a program module for support of certification, request permission, secure storage, etc. for hardware. In the network module, a module for support of network connection is provided that may include a DNET module, a UPnP module, etc.

The sensing module may be a module that collects information from various sensors included in the detector 110 and analyzes and manages the collected information. The sensing module may include a head direction recognition module, a face recognition module, a voice recognition module, a motion recognition module, an NFC recognition module, etc.

The presentation module is a module for configuring a display image. The presentation module includes a multimedia module for reproducing and outputting multimedia content and a user interface (UI) rendering module for performing UI and graphic processing. The multimedia module may include a player module, a camcorder module, a sound processing module, etc. Accordingly, the multimedia module may perform an operation for reproducing various multimedia content to generate an image and sound and reproducing the generated image and sound. The UI rendering module may include an image composition module for combining images, a coordinate combination module for combining coordinates on a screen on which an image is to be displayed, an X11 module for receiving various events from hardware, a 2D/3D UI toolkit for providing a tool for configuration of a two dimensional (2D) or three dimensional (3D) type UI.

As described above, the various software modules may be partially omitted, changed, or added according to the type and characteristics of the display apparatus 200. For example, the software module may further include a position-based module for support of a position-based service in conjunction with hardware such as a global positioning system (GPS) component.

The storage unit 140 may include a volatile memory 141. That is, in response to the user terminal 100 entering a sleep mode for reduction in power consumption, the volatile memory 141 may store information about a hardware operational state corresponding to mode entrance time. Accordingly, the user terminal 100 may preserve content stored in the volatile memory 141, such as a dynamic random access memory (DRAM), using a self-refresh operation of a DDR memory of the storage unit 140 when the user terminal is in a sleep mode. In addition, when a mode of the user terminal 100 is changed into a standby mode in response to a preset event occurring, an operating state prior to the user terminal entering sleep mode may be rapidly preserved.

In addition, the storage unit 140 may include a non-volatile memory 142. That is, when user detection or user detection result is not received within a preset threshold time after the user terminal 100 is changed from a standby mode to a sleep mode, content stored in the volatile memory 141 is moved to the non-volatile memory 142 by control of a main controller 131.

The display unit 150 is a component for displaying an image. In particular, the display unit 150 of the user terminal 100 may display various user interfaces (UIs) for easily controlling the display apparatus 200. For example, the display unit 150 may display a UI indicating information about settings of the display apparatus 200, corresponding to a time in which the user uses the display apparatus 200. That is, the display unit 150 may display a UI indicating information about a provider, a manufacturer, a type, and a character of an image displayed by the display apparatus 200, and setting information about brightness, a channel, and sound of the display apparatus 200.

In addition, the display unit 150 may be embodied as a touchscreen and may receive a user command for control of the display apparatus 200.

The microphone 160 is a component for receiving surrounding sound of the user terminal 100. In particular, the microphone 160 may receive a user's voice. Thus, in response to a user voice input to the user terminal 100 through the microphone 160 and the voice input being matched with a preset user voice , the user terminal 100 may determine that a user is present near the user terminal.

In addition, the user terminal 100 may receive a control command for controlling the display apparatus 200 as a voice command through the microphone 160.

The audio output unit 170 is a component for outputting various notification sounds or voice messages as well as various audio data. In this case, the audio output unit 170 may be embodied as a speaker, but this is merely exemplary, and the audio output unit 170 may be embodied as an audio terminal.

The user input unit 180 is a component for receiving a user command. The user input unit 180 may receive a user command for control of an overall operation of the display apparatus 200. In particular, as described above, the user input unit 180 may be embodied as a touchscreen to receive a control command using touch from a user or may be embodied as a microphone to receive a control command as a user voice. In addition, the user input unit 180 may be embodied as a plurality of push buttons positioned on an external surface of the user terminal 100.

The controller 130 includes the main controller 131 and a sub-controller 132. The main controller 131 is a component for controlling an overall operation of the user terminal 100. In particular, the main controller 131 may be powered on while the user terminal 100 is in a normal mode or a standby mode and may be powered off while the user terminal 100 is in a second sleep mode.

The sub-controller 132 is a component for controlling power of the main controller 131 (e.g., by turning power on or off) under control of the main controller 131. That is, in response to user manipulation intention being detected by detector 110 for a second sleep mode in which the main controller 131 is powered off, the sub-controller 132 may control the user terminal 100 to supply power to the main controller 131 and change a mode of the user terminal 100 to a standby mode.

In detail, in response to detecting proximity of a user to the user terminal 100 by proximity sensor 111 or detecting a user's grasp or touch of the user terminal 100 by the touch sensor 112 while the user terminal 100 is in a second sleep mode, the sub-controller 132 may determine that a user manipulation intention has been detected. Accordingly, the sub-controller 132 may control the user terminal 100 to supply power to the main controller 131 and change the mode of the user terminal 100 to a standby mode.

In addition, user terminal 100 may receive information through the communication unit 120 indicating that the display apparatus 200 has been powered on, which indicates a high probability that a user will use the user terminal 100 to control the display apparatus 200. Thus, in response to receiving information indicating that the display apparatus 200 is powered on, the sub-controller 132 may control the user terminal 100 to supply power to the main controller 131 and change the mode of the user terminal 100 to a standby mode.

In addition, in response to a motion of the user terminal 100 being detected through the acceleration sensor 115 or the gravity sensor 116, it may be determined that the motion of the user terminal 100 is generated by a behavior such as hand grasp of the user terminal 100 in order for a user to manipulate the user terminal 100. Accordingly, in response to the motion of the user terminal 100 being detected, the sub controller 132 may control the user terminal 100 to supply power to the main controller 131 and change the mode of the user terminal 100 to a standby mode.

In a normal mode, the mode of the user terminal 100 corresponds to a state in which power is supplied to the user terminal 100. In this case, when the user terminal 100 is not used for predetermined time, the main controller 131 may power off the display unit 150 or other components of the user terminal 100. For example, the standby mode may refer to a state in which the display unit 150 and/or the WiFi module 122 are powered off, but other components, such as the Bluetooth module 121 remain powered.

When a manipulation intention detection event that indicates a user manipulation intention does not occur within a preset threshold period of time while the user terminal 100 maintains a standby mode, the mode of the user terminal 100 may be changed to a second sleep mode. In addition, when a user detection event for detecting a user does not occur within preset threshold period of time while the user terminal 100 maintains a second sleep mode, the mode of the user terminal 100 may be changed to a first sleep mode.

In detail, when the manipulation intention detection event does not occur, the main controller 131 may store an operating state and various pieces of information in the volatile memory 141, power off the main controller 131, and transmit information to the sub-controller 132 indicating that the mode of the user terminal 100 is changed to a second sleep mode. According to a command of the main controller 131, the sub-controller 132 may power off the main controller 131 and change the mode of the user terminal 100 to a second sleep mode.

The manipulation intention detection event may include at least one of an event in which the proximity of a user to the user terminal 100 or user grasp or touch of the user terminal 100 is detected for preset threshold period of time, an event in which information indicating that the display apparatus 200 is powered on is received through the communication unit 120, and an event in which the motion of the user terminal 100 is detected through the acceleration sensor 115 or the gravity sensor 116, after the mode of the user terminal 100 is changed to a standby mode.

When the main controller 131 is powered off, the mode of the user terminal 100 is changed to a second sleep mode in which various operating information is stored in the volatile memory 141, and then when a user is not detected for preset threshold period of time, the mode of the user terminal 100 is changed to a first sleep mode.

That is, when the mode of the user terminal 100 is changed to a second sleep mode and a user within a preset distance from the user terminal 100 is not detected for preset threshold period of time, the sub controller 132 may supply power to the main controller 131. In this case, the main controller 131 may control the user terminal 100 to move and/or store operating information stored in the volatile memory 141 in a flash memory. In addition, information indicating that the main controller 131 and/or the volatile memory 141 are powered off may be transmitted to the sub-controller 132. The sub-controller 132 that receives information from the main controller 131 may power off the main controller 131 and/or the volatile memory 141. According to the aforementioned method, when a user is not detected within a threshold period of time, the mode of the user terminal 100 may be changed to a first sleep mode in which both the main controller 131 and/or the volatile memory 141 are powered off.

The sub-controller 132 may be always powered on irrespective of a power mode of the user terminal 100 and may control the user terminal 100 while the user terminal 100 maintains a sleep mode. In particular, in response to a preset event occurring while the user terminal 100 is in the first or second sleep mode, the sub-controller 132 may change the mode of the user terminal 100 to a standby mode.

In detail, when the presence of a user within a preset distance is detected by detector 110 or when the display apparatus 200 receives a detection result of user presence through the communication unit 120 while the user terminal 100 is in the first sleep mode in which the volatile memory 141 is powered off, the sub-controller 132 may control the user terminal 100 to supply power to the volatile memory 141 and change the mode of the user terminal 100 to the second sleep mode.

The user presence detection event may include at least one of an event in which a user present within a preset distance from the user terminal 100 is detected by detector 110, an event in which a change in illumination of a space in which the user terminal 100 is positioned is detected, an event in which a temperature change of an amount exceeding a threshold range is detected in a space in which the user terminal 100 is positioned, an event in which a preregistered user voice is input through the microphone 160, and an event in which a detection result indicating a user within a preset distance from the display apparatus 200 is received through the communication unit 120.

In detail, in response to detecting a user present within a preset distance from the user terminal 100 being by the PIR sensor 114 or detecting a user located near the user terminal 100 by the proximity sensor 111, the sub-controller 132 may determine that the user approaches the user terminal 100 in order to use the user terminal 100. Accordingly, the sub-controller 132 may power on the volatile memory 141 and control the user terminal 100 to change the mode of the user terminal 100 to the second sleep mode.

In addition, in response to a detection result indicating a user's presence near to the display apparatus 200 being received by the communication unit 120, the sub-controller 132 may determine that the user will use the user terminal 100 in order to control the display apparatus 200. Accordingly, the sub-controller 132 may power on the volatile memory 141 and control the user terminal 100 to change the mode of the user terminal 100 to the second sleep mode.

According to another exemplary embodiment, in response to the illuminance sensor 113 detecting an increase in the illuminance of a space in which the user terminal 100 is positioned, the sub-controller 132 may determine that the user is present in the space in which the user terminal 100 is positioned. In addition, when a voice input through the microphone 160 is determined to be a preregistered user voice, the sub-controller 132 may determine that a user for the user terminal 100 is present. Thus, the sub-controller 132 may power on the volatile memory 141 and control the user terminal 100 to change the mode thereof to a second sleep mode.

When a temperature sensor (not shown) indicates that a temperature of a space in which the user terminal 100 is positioned changes to a temperature outside a threshold range, the sub-controller 132 may determine that the user is present in that space. For example, when a user arrives in a house or an office in which the user terminal 100 is present, the user may cause the temperature to change by adjusting cooling or heating (e.g., by the user adjusting a thermostat to a specified cooling or heating setpoint). Accordingly, the sub controller 132 may determine a user is present when a temperature value changes to a value outside a threshold range.

In response to an event for detection of user manipulation intention occurring while the user terminal 100 is in the second sleep mode, the sub-controller 132 may control the user terminal 100 to power on the main controller 131 and convert the mode of the user terminal 100 to a standby mode.

For example, the event for detection of user manipulation intention may include at least one of an event in which the display apparatus 200 is powered on, and an event in which grasp of the user terminal 100, a motion of the user terminal 100, and/or user touch are detected through the detector 110.

In detail, in response to user touch input being detected through the touch sensor 112 included in the user terminal 100, the sub-controller 132 may determine that the user manipulation intention is detected.

In response to the motion of the user terminal 100 being detected by the acceleration sensor 115 or the gravity sensor 116, the sub-controller 132 may determine that user manipulation intention is detected. That is, detection of the movement of the user terminal 100 through the acceleration sensor 115 or the gravity sensor 116 may typically and/or frequently correspond to the case in which the user grasps the user terminal 100 with his or her hand and manipulates the user terminal 100. Thus, in response to the motion of the user terminal 100 being detected through the acceleration sensor 115 or the gravity sensor 116, the sub-controller 132 may control the user terminal 100 to power on the main controller 131 and change the mode of the user terminal 100 to a standby mode.

In response to user touch, user grasp of the user terminal 100, and/or a motion of the user terminal 100 being detected, the main controller 131 may control the user terminal 100 to supply power to the display unit 150. For example, in response to user touch, user grasp of the user terminal 100, and/or a motion of the user terminal 100 being detected, the main controller 131 may control the user terminal 100 to supply power continuously to the display unit 150 Accordingly, the mode of the user terminal 100 may be changed to a normal mode.

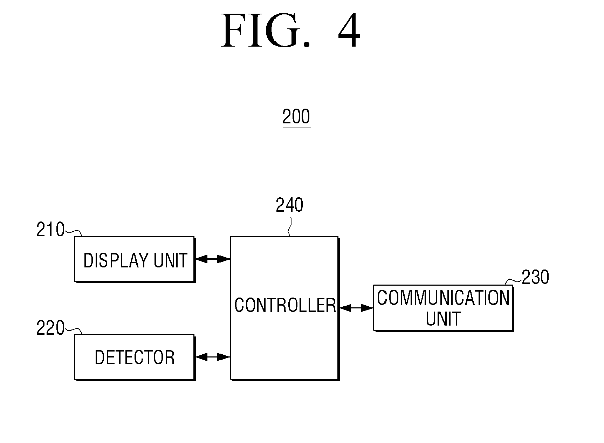

FIG. 4 is a block diagram illustrating a configuration of the display apparatus 200 that is subjected to control of the user terminal 100 according to an exemplary embodiment.

The display apparatus 200 includes a display unit 210, a detector 220, a communication unit 230, and a controller 240.

The display unit 210 is a component for displaying an image. The display unit 210 may display content received through a broadcast channel. That is, the display apparatus 200 may receive various broadcast signals transmitted from a broadcaster through a radio frequency (RF) communication network or receive content from various servers through an internet protocol (IP) network. Accordingly, the display unit 210 may display received content.

In addition, the display unit 210 may display various Uls. That is, the display unit 210 may display a UI for controlling settings of the display apparatus 200 or environments under control of the user terminal 100.

The detector 220 is a component for detecting a user and/or user interaction. In detail, the detector 220 may include various sensors such as a passive infrared (PIR) sensor, an ultrasonic sensor, and/or an RF sensor and may detect the presence of a user near the display apparatus 200. In addition, the detector 220 may include an illumination sensor for detecting a change of illumination.

The communication unit 230 is a component for communicating with various types of external devices or external servers according to various types of communication methods. That is, the communication unit 230 may include various communication modules such as a WiFi module, a Bluetooth module, a wireless communication module, and an NFC module and communicate with an external device. In this case, the WiFi module, the Bluetooth module, the wireless communication module, and the NFC module perform communication via a WiFi method, a Bluetooth method, a wireless communication method and NFC method, respectively. Among these, the NFC module refers to a module that operates via a near field communication (NFC) method using a band of 13.56 MHz among various RF-ID frequency bands such as 135 kHz, 13.56 MHz, 433 MHz, 860 to 960 MHz, and 2.45 GHz. When the Bluetooth module or the WiFi module is used, various pieces of connection information such as an SSID, a session key, etc. may be pre-transmitted and received, communication-connection is achieved using the connection information, and then various pieces of information may be transmitted and received. The wireless communication module refers to a module that performs communication according to various communication standards such as IEEE, ZigBee, 3rd generation (3G), 3rd generation partnership project (3GPP), long term evolution (LTE), etc.

In particular, the communication unit 230 may communicate with the user terminal 100 according to the aforementioned various communication methods. In detail, the communication unit 230 may transmit the result detected through the detector 220 to the user terminal 100. For example, in response to detector 220 detecting the presence of a user near the display apparatus 200, the communication unit 230 may transmit the user detection result to the user terminal 100 .

In response to a change in illumination or lighting level being detected through an illuminance sensor, the communication unit 230 may transmit the detection result to the user terminal 100.

The communication unit 230 may receive a control command from the user terminal 100. That is, the communication unit 230 may receive various control commands (e.g., channel change, sound change, or various setting changes) input through the user terminal 100 according to the aforementioned various communication methods.

The controller 240 is a component for controlling an overall operation of the display apparatus 200. That is, the controller 240 controls an overall operation of the display apparatus 200 using various programs stored in a storage unit.

The controller 240 includes a random access memory (RAM), a read only memory (ROM), a graphic processor, a main CPU, first to nth interfaces, and a bus. In this case, the RAM, the ROM, the graphic processor, the main CPU, and the first to nth interfaces may be connected to each other through the bus.

A command set, etc. for system booting is stored in the ROM. Upon receiving a turn-on command to receive power, the main CPU may copy an operating system (O/S) stored in the storage unit to the RAM according to a command stored in the ROM and execute the O/S to boot a system. In response to completing system booting, the main CPU copies various applications programs stored in the storage unit to the RAM and executes the application programs copied to the RAM to perform various operations.

The graphic processor generates an image including various objects such as an icon, an image, a text, etc. using a calculator and a rendering unit. The calculator calculates an attribute value such as a coordinate value, a shape, a size, color, etc. for displaying each object according to layout of an image. The rendering unit generates images of various layouts including an object based on the attribute value calculated by the calculator. The image generated by the rendering unit is displayed in a display area of the display unit the display unit 210.

The main CPU accesses the storage unit and performs booting using the O/S stored in the storage unit. In addition, the main CPU performs various operations using various programs, content, data, etc. stored in the storage unit

The first to nth interfaces are connected to the aforementioned various components. One of the interfaces may be a network interface connected to an external device.

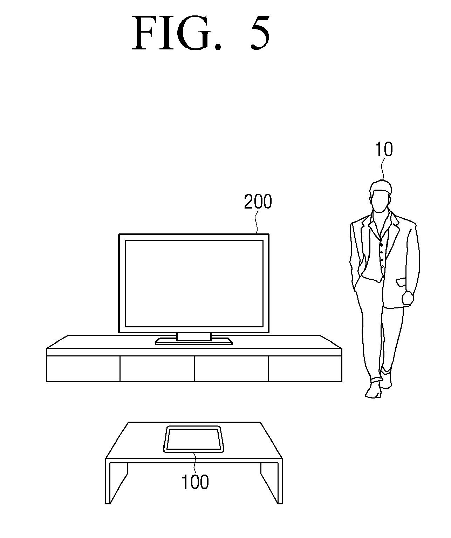

Hereinafter, with reference to FIGS. 5 to 8, a method of changing a power mode of the user terminal 100 will be described in detail.

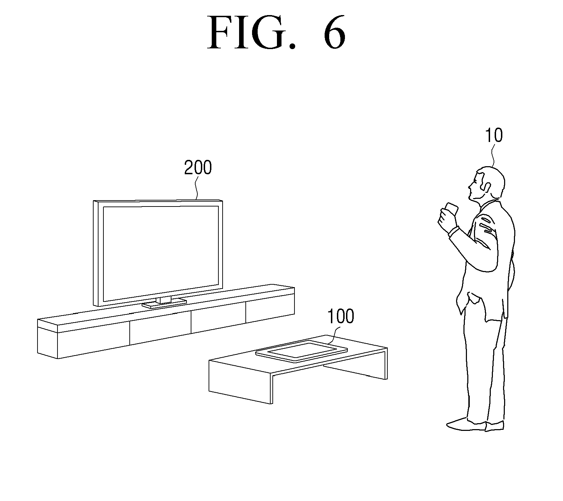

FIGS. 5 and 6 are diagrams for explanation of characteristics whereby a mode of the user terminal 100 is changed to the second sleep mode from the first sleep mode in response to a user being detected, according to an exemplary embodiment. That is, in response to detecting a user's presence near the user terminal 100 or the display apparatus 200, it may be expected that a user will use the user terminal 100 in order to use the display apparatus 200. Accordingly, the sub-controller 132 of the user terminal 100 that is in a sleep mode may subsequently and/or sequentially supply power to the volatile memory 141 and the main controller 131.

In detail, FIG. 5 illustrates an exemplary embodiment in which the display apparatus 200 detects that a user 10 is present within a preset distance. The display apparatus 200 may include various sensors such as a passive infrared (PIR) sensor, an ultrasonic sensor, an RF sensor, and the like. Thus, the display apparatus 200 may detect that a user is present near the display apparatus 200 using various sensors.

The display apparatus 200 may transmit the user detection result to the user terminal 100 through the communication unit 230. That is, the display apparatus 200 may transmit the user detection result using a communication method such as Bluetooth or WiFi.

FIG. 6 is a diagram illustrating the case in which the user terminal 100 detects a user. As illustrated in FIG. 6, the user terminal 100 may detect that a user is present within a preset distance of the user terminal 100 using the proximity sensor 111 or the PIR sensor 114 included in the detector 110.

That is, in response to the user detection result being received through the communication unit 120 or the user being detected through the detector 110, the sub-controller 132 of the user terminal 100 may supply power to the volatile memory 141 so as to change the mode to the second sleep mode from the first sleep mode.

When the sub-controller 132 supplies power to the volatile memory 141 and does not detect a user or user interaction through the detector 110 within a preset period of time, does not receive the user detection result through the communication unit 120, or does not receive information indicating that the display apparatus 200 is powered on through the communication unit 120, the user terminal 100 may again power off the volatile memory 141.

On the other hand, when the sub-controller 132 supplies power to the volatile memory 141 and detects a user manipulation intention within a preset period of time, the sub-controller 132 may supply power to the main controller 131. That is, the mode of the user terminal 100 may be changed to a standby mode.

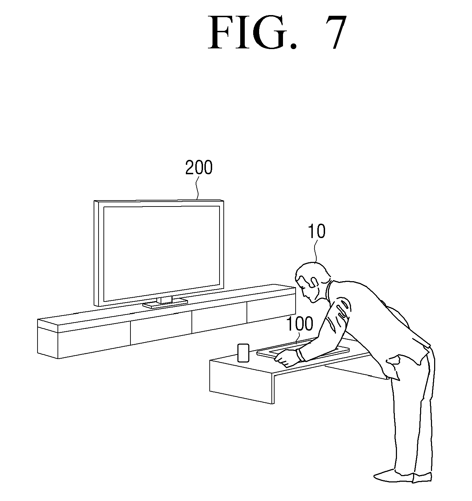

In detail, as illustrated in FIG. 7, when the user 10 grasps the user terminal 100, the touch sensor 112 included in the user terminal 100 detects user touch, or the acceleration sensor 115 or the gravity sensor 116 may detect motion of the user terminal 100. In this case, the sub-controller 132 supplies power to the main controller 131 so as to change the mode to a standby mode.

In addition, prior to detection of touch of the user 10 or movement of the user terminal 100, when the presence of user 10 within a region that is very close to the user terminal 100 (e.g. within 1 cm) is detected, the mode of the user terminal 100 may also be changed to a standby mode. That is, the user terminal 100 may determine close proximity of the user 10 to the user terminal 100 as a manipulation intention of the user 10 for using the user terminal 100.

In response to user or user interaction being continuously detected by the user terminal 100, which is in a standby mode, the main controller 131 may supply power to the display unit 150. That is, the user terminal 100 may supply power to all components so as to change the mode from the standby mode to a normal mode.

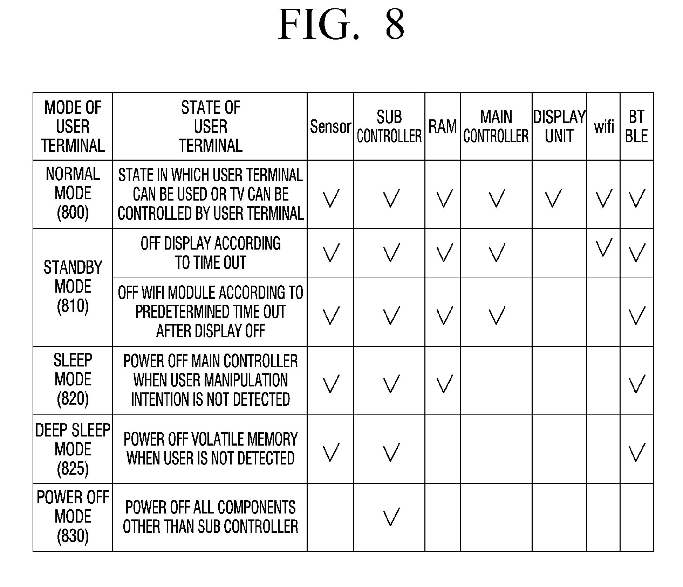

FIG. 8 is a diagram for explanation of various modes of a user terminal 100 for control of a display apparatus 200 according to an exemplary embodiment.

As illustrated in FIG. 8, the user terminal 100 may operate in one of a normal mode 800, a standby mode 810, a sleep mode 820 (i.e. a first sleep mode), a deep sleep mode 825 (a second sleep mode), and a power off mode 830.

The normal mode 800 refers to a state in which the user terminal 100 is capable of being separately used and the display apparatus 200 such as television (TV) is capable of being controlled using the user terminal 100. Thus, when the user terminal 100 operates in the normal mode 800, power is supplied to all components included in the user terminal 100.

When the user terminal 100 is not used for a threshold period of time, the user terminal 100 may enter a standby mode 810, which refers to a state in which at least one of the display unit 150 and the WiFi module 122 is powered off.

In detail, when a user command for control of the display apparatus 200 is not input for threshold period of time (e.g. 15 seconds), the user terminal 100 may be controlled to enter the standby mode 810 in order to power off the display unit 150.

When the display unit 150 is powered off and a user command for control of the display apparatus 200 is not re-input for a threshold period of time, the user terminal 100 may power off the WiFi module 122.

That is, while a user command is not input, the user terminal 100 may power off the display unit 150 and the WiFi module 122 in order to reduce the power consumption of the user terminal 100.

When a user manipulation intention is not detected while the user terminal 100 operates in the standby mode 810, the user terminal 100 may power off the main controller 131.

In detail, while the user terminal 100 is operating in the standby mode 810, when information indicating that a TV is powered off is received through the communication unit 120, when the user detection result of a TV is not received through the communication unit 120 within a threshold period of time, when a user or user proximity is not detected through the proximity sensor 111 or the PIR sensor 114, or when illumination sensor 113 detects a change in illumination level (e.g., the illumination level sharply decreases) of a space in which the user terminal 100 is present, the main controller 131 may control the user terminal 100 to store an operating state of hardware in the volatile memory 141. In addition, the main controller 131 may transmit information indicating that the main controller 131 will be powered off to the sub controller 132 and power off the main controller 131. Accordingly, the user terminal 100 may change the mode of the user terminal 100 to the sleep mode 820.

When the mode of the user terminal 100 is changed to the sleep mode 820 and the user or user detection information is not received for preset threshold period of time, the mode of the user terminal 100 may be changed to the deep sleep mode 825.

In detail, while the user terminals operates in the sleep mode 820, when the user detection result of a TV is not received through the communication unit 120 within a threshold period of time or when a user or user proximity is not detected through the proximity sensor 111 or the PIR sensor 114, the sub-controller 132 may supply power to the main controller 131. In addition, the main controller 131 may control the user terminal 110 to move and/or store various pieces of operating information stored in the volatile memory 141 to a flash memory. In addition, the main controller 131 may transmit information indicating that the main controller 131 and/or the volatile memory 141 will be powered off to the sub-controller 132. The sub-controller 132 that receives the information may power off the main controller 131 and/or the volatile memory 141 and the mode of the user terminal 100 may be changed to the deep sleep mode 825.

The power off mode 830 refers to a mode in which all components except for the sub-controller 132 are powered off when power of the user terminal 100 is completely discharged or a power off command of the user terminal 100 is input from a user.

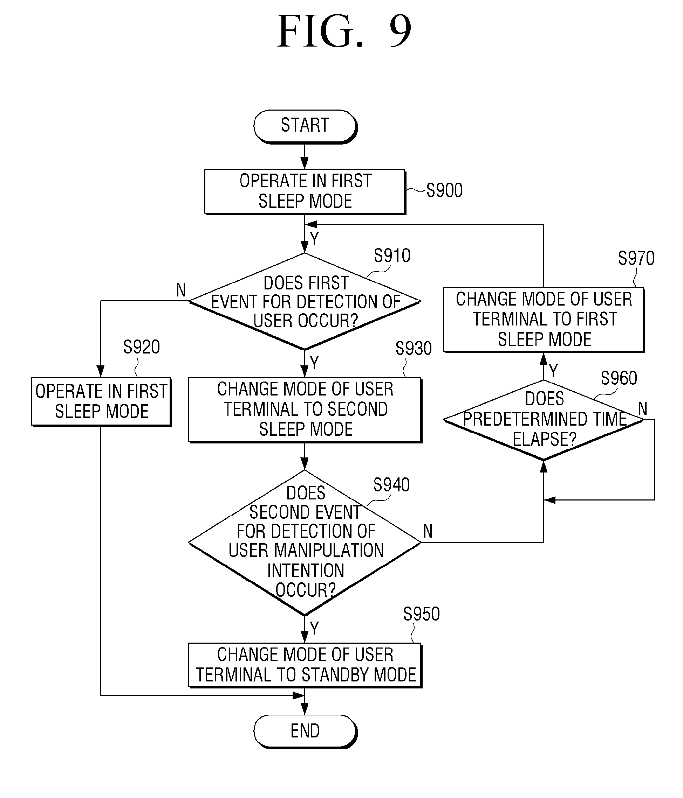

FIG. 9 is a flowchart of a control method of the user terminal 100 according to an exemplary embodiment. In particular, FIG. 9 is a flowchart of a method of changing a mode of the user terminal 100 to a standby mode from a sleep mode.

First, the user terminal 100 operates in a first sleep mode in which power is supplied only to necessary components such as various sensors, a sub controller, and a Bluetooth module (S900).

While the user terminal 100 operates in a first sleep mode, in response to a first event for user detection occurring (S910-Y), the user terminal 100 changes a mode of the user terminal 100 to a second sleep mode (S930).

The first sleep mode refers to a state in which power is not supplied to components except for necessary components such as various sensors, a sub-controller, and a Bluetooth module. Accordingly, in response to a user detection event occurring, the user terminal 100 may supply power to a component such as volatile memory to change a mode to the second sleep mode from the first sleep mode.

In detail, in response to the user detection result being received from the display apparatus 200 or in response to the user being detected by various sensors included in the user terminal 100, the user terminal 100 may supply power to a volatile memory of the user terminal 100 to change a mode to the second sleep mode from the first sleep mode.

While the user terminal operates in the first sleep mode, in response to the first event for user detection occurring (S910-N), the user terminal 100 may continue to operate in the first sleep mode. In addition, when the user terminal 100 has operated in the first sleep mode for a preset period of time, the mode of the user terminal 100 may be changed to a power off state.

When the mode of the user terminal 100 is changed to the second sleep mode and the second event for detection of user manipulation intention occurs (S940-Y), the user terminal 100 may change the mode of the user terminal 100 to a standby mode (S950).

The second event for detection of user manipulation intention may include at least one of an event in which the proximity of a user to the user terminal 100 or user grasp or touch of the user terminal 100 is detected, an event in which information indicating that the display apparatus 200 is powered on is received, and an event in which motion of the user terminal 100 is detected through an acceleration sensor or a gravity sensor.

Accordingly, in response to the aforementioned second event occurring, the user terminal 100 may supply power to a main controller to change the mode of the user terminal 100 to a standby mode.

When a second event for detection of user manipulation intention does not occur (S940-N) and a preset period of time elapses (S960-Y), the user terminal 100 changes the mode of the user terminal 100 to a first sleep mode (S970).

That is, when power is supplied to a volatile memory to change a mode to the second sleep mode, if the user terminal 100 is not used for a preset period of time, the user terminal 100 may again power off the volatile memory to change the mode to the first sleep mode in order to reduce power consumption.

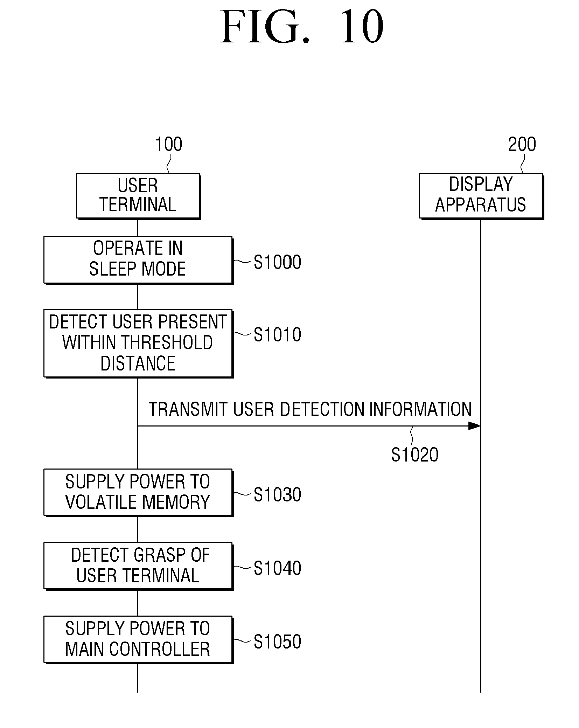

FIG. 10 is a sequence diagram for explanation of a detailed method of changing a mode of the user terminal 100 to a standby mode from a sleep mode according to an exemplary embodiment.

While the user terminal 100 operates in a sleep mode (S1000), the user terminal 100 may detect that a user is present within a threshold distance (S1010). That is, the user terminal 100 may detect the presence of a user that approaches the user terminal 100, such as by a PIR sensor indicating presence of a user within a predetermined distance.

In addition, the user terminal 100 may transmit the detection result of the presence of the user within the threshold distance to the display apparatus 200 (S1020). That is, the display apparatus 200 may receive the detection result of the user presence from the user terminal 100 so as to prepare to be rapidly powered on immediately after a user command is input by performing a booting operation such as an instant booting.

The user terminal 100 that detects user presence supplies power to a volatile memory (S1030).

In response to a grasp of the user terminal 100 being detected (S1040), the user terminal 100 supplies power to a main controller (S1050). In response to a grasp of the user terminal 100 being detected using a touch sensor, a proximity sensor, an acceleration sensor, a gravity sensor, or the like, the user terminal 100 may supply power to the main controller to change the mode to a standby mode. That is, when the user performs a detailed operation such as a grasp of the user terminal 100, the user terminal 100 may determine that the user intends to manipulates the user terminal 100. Accordingly, the mode of the user terminal 100 may be changed into a standby mode.

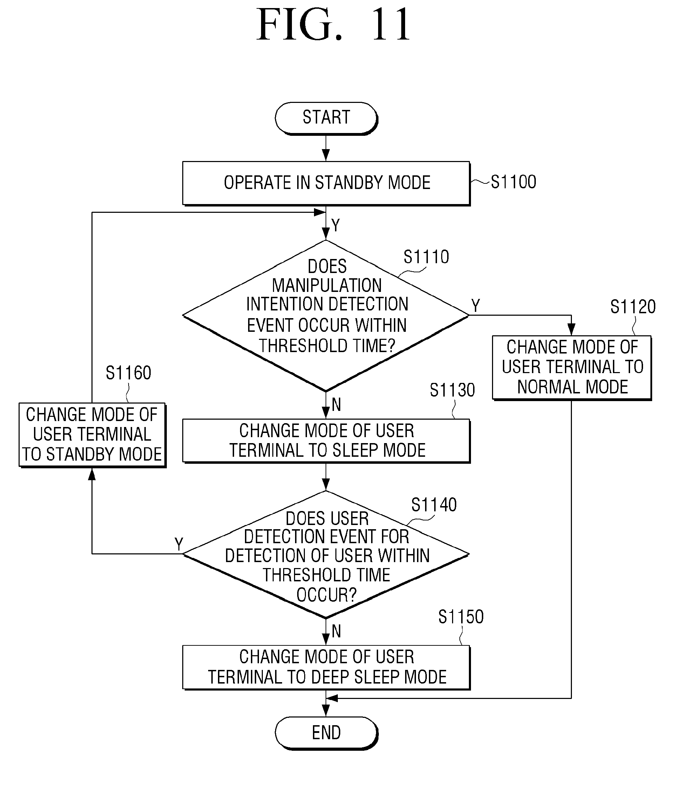

FIG. 11 is a flowchart of a method of changing a mode of the user terminal 100 to a sleep mode according to an exemplary embodiment.

As illustrated in FIG. 11, first, when the user terminal 100 operates in a standby mode (S1100), if it is determined that a manipulation intention detection event for detection of user manipulation intention occurs within threshold period of time according to detection and communication result occurs (S1110-Y), the user terminal 100 changes the mode of the user terminal 100 to a normal mode (S1120).

The manipulation intention detection event may include at least one of an event in which the proximity of a user to the user terminal 100 or user grasp or touch of the user terminal 100 is detected within preset threshold time, an event in which information indicating that the display apparatus 200 is powered on is received, or an event in which the motion of the user terminal 100 is detected through an acceleration sensor or a gravity sensor, while the user terminal 100 is in a standby mode.

Accordingly, in response to the manipulation intention detection event occurring, the user terminal 100 may determine that the user performs a touch or grasp in order to use the user terminal 100 and change a mode of the user terminal 100 to a normal mode in which power is supplied to all components of the user terminal 100.

On the other hand, when the manipulation intention detection event for detection of user manipulation intention does not occur within a threshold period of time (S1110-N), the user terminal 100 changes a mode of the user terminal 100 to a sleep mode (S1130). In detail, the user terminal 100 may store operating state and various pieces of information in a volatile memory, power off a main controller, and transmit information to a sub-controller indicating the mode of the user terminal 100 will be changed to a sleep mode. The sub-controller may power off the main controller to change the mode of the user terminal 100 to a sleep mode according to a received command.

When a user detection event for user detection does not occur in a sleep mode (S1140), the user terminal 100 may change the mode of the user terminal 100 to a deep sleep mode (S1150).

The user detection event may include at least one of an event in which a user present within a preset distance of the user terminal 100 is detected by a detector, an event in which a change in illumination of a space in which the user terminal 100 is positioned is detected, an event in which a pre-registered user voice is input through the microphone 160, or an event in which the detection result of user presence within the preset distance of the display apparatus 200 is received through the communication unit 120.

Accordingly, when the mode of the user terminal 100 is changed to a sleep mode and a user is not detected for a preset threshold period of time, the sub-controller of the user terminal 100 may supply power to the main controller. In this case, the main controller may control the user terminal 100 to move and store operating information stored in a volatile memory to a flash memory. In addition, information indicating that the main controller and the volatile memory will be powered off may be transmitted to the sub-controller. The sub-controller that receives the information from the main controller may power off the main controller and the volatile memory. In this manner, when the user is not detected for threshold period of time, the mode of the user terminal 100 may be changed to a deep sleep mode in which the main controller and the volatile memory are powered off.

In response to the user detection event for user detection occurring within a threshold period of time (S1160-Y), the user terminal 100 may again change the mode of the user terminal 100 to a standby mode. That is, the user terminal 100 may again supply power to the main controller 131 to change the mode of the user terminal 100 to a standby mode.

Using this control method of the user terminal 100, a user may reduce the number of times and/or the frequency of charging the user terminal due to improved power management of the user terminal, and the user terminal can respond to user interaction more quickly.

According to the aforementioned exemplary embodiments, a frequency of charging a user terminal may be reduce and a user terminal may immediately respond to user interaction.

The aforementioned method of controlling a display apparatus may be coded in software and stored in non-transitory readable medium. The non-transitory readable medium may be installed and used in various apparatuses.

Here, the non-transitory computer readable media refers to a medium that semi-permanently stores data and is readable by a device instead of a medium that stores data for a short time period, such as a register, a cache, a memory, etc. In detail, the aforementioned programs may be stored and provided in the non-transitory computer readable media such as CD, DVD, hard disc, blue ray disc, USB storage device, a memory card, ROM, etc.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A user terminal (100) comprising:
a detector (110) configured to detect a user or user interaction; and
a controller (130) configured to change a mode of the user terminal (100) from a first sleep mode to a second sleep mode in response to an occurrence of a first event in which a user is detected by the detector (110) while the user terminal (100) is in the first sleep mode, and to change the mode of the user terminal (100) from the second sleep mode to a standby mode in response to an occurrence of a second event in which a user manipulation intention is detected by the detector (110) while the user terminal (100) is in the second sleep mode.

2. The user terminal (100) as claimed in claim 1, wherein:
the controller (130) comprises a main controller (131) and a sub-controller (132);
the main controller (131) is configured to be powered off while the user terminal (100) is in the second sleep mode; and
the sub-controller (132) is configured to power on the main controller (131) to change the mode of the user terminal (100) to the standby mode in response to the occurrence of the second event in which the user manipulation intention is detected by the detector (110) while the user terminal (100) is in the second sleep mode.

3. The user terminal (100) as claimed in claim 2, further comprising a volatile memory (141), wherein:
the volatile memory (141) is configured to be powered off while the user terminal (100) is in the first sleep mode; and
the sub controller (132) is configured to power on the volatile memory (141) to change the mode of the user terminal (100) to the second sleep mode in response to the occurrence of the first event in which the user is detected by the detector (110) or user detection information being received from a display apparatus while the user terminal (100) is in the first sleep mode.

4. The user terminal (100) as claimed in any one of claims 1 to 3, wherein the first event comprises the detector (110) detecting a presence of the user within a preset distance of the user terminal (100).

5. The user terminal (100) as claimed in any one of claims 1 to 4, wherein the second event comprises the detector (110) detecting at least one of a user grasping the user terminal (100), a motion of the user terminal (100), proximity of a user to the user terminal (100), and a user touching the user terminal (100).

6. A method of controlling a user terminal (100), the method comprising:
operating the user terminal in a first sleep mode (S900);
changing a mode of the user terminal (100) from the first sleep mode to a second sleep mode in response to an occurrence of a first event in which a user is detected while the user terminal is in the first sleep mode (S930); and
changing the mode of the user terminal from the second sleep mode to a standby mode in response to an occurrence of a second event in which a user manipulation intention is detected while the user terminal is in the second sleep mode (S950).

7. The method as claimed in claim 6, wherein the changing the mode of the user terminal (100) from the second sleep mode to the standby mode comprises powering on a main controller that is powered off while the user terminal (100) is in the second sleep mode to change the mode of the user terminal (100) to the standby mode by a sub-controller included in the user terminal (100) in response to the occurrence of the second event in which the user manipulation intention is detected while the user terminal (100) is in the second sleep mode.

8. The method as claimed in claim 7, wherein the changing the mode of the user terminal (100) from the first sleep mode to the second sleep mode comprises powering on a volatile memory that is powered off while the user terminal (100) is in the first sleep mode to change the mode of the user terminal (100) to the second sleep mode by the sub-controller in response to the occurrence of the first event in which the user is detected during the first sleep mode.

9. The method as claimed in claim 7 or 8, wherein the first event comprises detecting a presence of the user within a preset distance of the user terminal (100).

10. The method as claimed in any one of claims 7 to 9, wherein the second event comprises detecting at least one of a user grasping the user terminal (100), a motion of the user terminal (100), proximity of the user to the user terminal (100), and a user touching the user terminal (100).

11. A user terminal (100) including:
a detector (110) configured to detect a user or user interaction; and
a controller (130) configured to convert a mode of the user terminal (100) to a sleep mode when a manipulation intention detection event for detection of user manipulation intention does not occur within preset threshold time while the user terminal (100) maintains a standby mode, and to convert the mode of the user terminal (100) to a deep sleep mode when a user detection event for detection of the user does not occur within preset threshold time while the user terminal (100) maintains the sleep mode.

12. The user terminal (100) as claimed in claim 11, wherein:
the controller (130) includes a main controller (131) and a sub-controller (132); and
the main controller (131) is configured to transmit a command for powering off the main controller (131) to the sub-controller (132) and power off the main controller (131) to change the mode of the user terminal (100) to the sleep mode when the manipulation intention detection event does not occur within a preset first threshold period of time while the mode of the user terminal (100) is in the standby mode, wherein the manipulation intention detection event comprises at least one of detecting a user grasping the user terminal (100), detecting motion of the user terminal (100), detecting proximity of a user to the user terminal (100), or detecting a user touching the user terminal (100).

13. The user terminal (100) as claimed in claim 12, wherein:
the user terminal (100) further includes a volatile memory (141), and a non-volatile memory (142), wherein the sub controller (132) is configured to power off the main controller (131) to change the mode of the user terminal (100) to the deep sleep mode in response to presence of the user within a preset distance being detected by the detector (110) while the mode of the user terminal (100) is in the sleep mode.

14. A method of controlling a user terminal (100), the method comprising:
operating the user terminal in a standby mode (S1100);
changing a mode of the user terminal (100) from the standby mode to a sleep mode when a manipulation intention detection event for detection of user manipulation intention does not occur within preset threshold time while the user terminal (100) maintains a standby mode (S1130); and
changing the mode of the user terminal from the sleep mode to a deep sleep mode when a user detection event for detection of the user does not occur within preset threshold time while the user terminal (100) maintains the sleep mode (S1150).

15. A non-transitory computer readable medium which stores a program for executing the method according to any of claims 6 to 10 or claim 14.
